# FASCICULE DE BREVET EUROPEEN

(11) **EP 1 900 051 B1**
(45) Date de publication et mention de la délivrance du brevet: **22.09.2010**
(21) Numéro de dépôt: 06778657.4
(22) Date de dépôt: 23.06.2006
(51) Int. Cl.: H01M 8/02

(54) **PLAQUE BIPOLAIRE POUR PILE A COMBUSTIBLE COMPRENANT UN CANAL DE LIAISON**
BIPOLARPLATTE FÜR EINE BRENNSTOFFZELLE MIT EINEM VERBINDUNGSKANAL
BIPOLAR PLATE FOR FUEL CELL COMPRISING A CONNECTING CHANNEL

(30) Priorité: 28.06.2005 FR 0506599
(43) Date de publication de la demande: 19.03.2008
(73) Titulaire: PEUGEOT CITROËN AUTOMOBILES S.A., 78140 Vélizy Villacoublay (FR); COMMISSARIAT A L'ENERGIE ATOMIQUE, 75015 Paris (FR)
(72) Inventeur: LEMASSON, Damien, F-69100 Villeurbanne (FR); JONCQUET, Guillaume, F-75015 Paris (FR); POIROT-CROUVEZIER, Jean-Philippe, F-38450 Saint Georges De Commiers (FR)
(74) Mandataire: Habasque, Etienne J. Jean-François
(86) Numéro de dépôt international: PCT/FR2006/001460
(87) Numéro de publication internationale: WO 2007/003743

(56) Documents cités:
- EP-A- 1 284 512
- DE-A1- 10 347 229
- US-A1- 2003 054 216

## Description

La présente invention est relative à une plaque bipolaire pour une pile à combustible du type à membrane échangeuse de protons. La plaque bipolaire est constituée de deux demi-plaques bipolaires accollées l'une à l'autre, chaque demi-plaque bipolaire étant constituée d'une plaque généralement rectangulaire comportant dans sa partie centrale une zone active, et à sa partie périphérique une pluralité de découpes destinées à constituer des boîtes à fluide, ainsi que des nervures destinées à assurer l'étanchéité.

Une pile à combustible à membrane échangeuse de protons est un dispositif de production d'électricité par réaction électrochimique entre un carburant, par exemple un gaz contenant de l'hydrogène, et un comburant, par exemple un gaz contenant de l'oxygène, séparés par une paroi constituée d'un électrolyte solide. Dans un tel dispositif lorsque le carburant est un gaz hydrogéné et le comburant un gaz oxygéné, le gaz hydrogéné et le gaz oxygéné réagissent pour former de l'eau tout en générant un courant électrique qui peut être utilisé pour des usages divers.

D'une façon générale, une pile à combustible est constituée d'un empilement de cellules réactives ou cellules élémentaires constituées chacune d'un ensemble membrane/ électrode inséré entre deux plaques bipolaires comportant des canaux destinés à assurer la circulation, d'une part, du carburant, d'autre part, du comburant, et enfin, d'un fluide caloporteur tel que de l'eau. L'ensemble membrane/ électrode est un matériau multicouches, connu en lui-même, comprenant une couche constituée de la membrane d'électrolyte solide proprement dite, disposée entre deux couches actives constituant, d'une part, une cathode, d'autre part, une anode, revêtues elles-mêmes de deux couches externes dites couches de diffusion. L'empilement de cellules élémentaires est généralement maintenu serré entre deux plaques terminales bridées par des goujons s'étendant d'une plaque terminale à l'autre et traversant l'empilement de cellules élémentaires,

Généralement les plaques bipolaires sont réalisées dans des matériaux offrant de bonnes aptitudes de résistance à la corrosion et de conductivité électrique. On connaît par exemple des plaques bipolaires réalisées dans des matériaux carbonés tel que le graphite, un polymère imprégné de graphite, ou les feuilles de graphite souple, mis en forme par usinage ou par moulage. On connaît également des plaques bipolaires réalisées dans des matériaux métalliques tels que des alliages à base de titane, d'aluminium ou à base de fer. Ces plaques bipolaires réalisées en matériau métallique sont en général des plaques mises en forme par emboutissage ou estampage. Dans les plaques bipolaires réalisées à partir de feuilles métalliques mises en forme par emboutissage, l'arrivée des fluides et l'évacuation des sous-produits sont réalisés dans des zones de la plaque bipolaire localement plane, ce qui nécessite l'utilisation d'un cadre ayant une forme adaptée et pouvant servir également à assurer l'étanchéité périphérique de la plaque bipolaire, De telles plaques bipolaires sont connues de US 2003/054216. Cette technique présente l'inconvénient de nécessiter pour une même plaque bipolaire, outre deux demi-plaques bipolaires, une pièce complémentaire destinée à assurer la jonction entre les deux demi-plaques bipolaires et à assurer les alimentations et les évacuations de fluide et de sous-produit. II en résulte des plaques bipolaires relativement massives.

Le but de la présente invention est de remédier à ces inconvénients en proposant une plaque bipolaire réalisée à partir de plaques métalliques, qui soit plus légère et plus économique que les plaques connues tout en permettant de façon simple l'approvisionnement et l'évacuation des fluides.

A cet effet, l'invention a pour objet une plaque bipolaire pour pile à combustible comprenant une demi-plaque bipolaire cathodique et une demi-plaque bipolaire anodique accolées l'une à l'autre, chaque demi-plaque bipolaire étant constituée d'une plaque métallique comportant dans sa partie centrale une zone active et à sa partie périphérique une pluralité de découpes destinées à constituer au moins deux boîtes à comburant, au moins deux boîtes à carburant et au moins deux boîtes à fluide caloporteur, la plaque bipolaire comprenant au moins un canal de liaison entre chaque découpe périphérique et la zone active constitué d'au moins une nervure dans une demi-plaque bipolaire.

De préférence, chaque canal de liaison d'une découpe périphérique avec la zone active est constitué au moins de deux nervures en regard l'une de l'autre, une nervure étant prévue dans une demi-plaque bipolaire et l'autre nervure étant prévue dans l'autre demi-plaque bipolaire.

Lorsque une découpe est destinée à constituer une boîte à fluide caloporteur, l'au moins une nervure qui constitue le canal de liaison entre ladite découpe et la zone active débouche dans zone active, entre les deux demi-plaques bipolaires.

Les canaux de liaison entre les boîtes à comburant et la zone active, débouchent, au voisinage de ladite zone active, sur la face externe de la demi-plaque bipolaire cathodique par exemple par l'intermédiaire d'une découpe prévue dans ladite demi-plaque bipolaire cathodique, et les canaux de liaison entre les boîtes à carburant et la zone active, débouchent, au voisinage de ladite zone active, sur la face externe de la demi-plaque bipolaire anodique par exemple par l'intermédiaire d'une découpe prévue dans ladite demi-plaque anodique.

De préférence, la plaque bipolaire comprend au moins un canal de liaison incliné ou évasé disposé au point bas d'au moins une découpe destinée à réaliser une boîte à comburant.

De préférence également, la plaque bipolaire comprend au moins un canal de liaison incliné ou évasé disposé au point bas d'au moins une découpe destinée à réaliser une boîte à carburant.

De préférence, la plaque bipolaire comprend des canaux de liaison inclinés ou évasés disposés en tout point bas potentiel des boîtes à carburant et des boîtes à comburant.

Au moins une demi-plaque bipolaire peut être une plaque métallique, par exemple en acier inoxydable, mise en forme par découpage, par exemple au laser, et emboutissage.

L'invention concerne également une pile à combustible du type comprenant au moins une cellule constituée d'un assemblage membrane/électrode comprenant au moins une plaque bipolaire.

L'invention va maintenant être décrite plus en détail mais de façon non limitative en regard des figures annexées dans laquelle :
- la figure 1 est une vue de face d'une plaque bipolaire ;
- la figure 2 est une vue en perspective agrandie d'une plaque bipolaire dans la zone de jonction entre une boîte à fluide de refroidissement et la zone active ;
- la figure 3 est une vue agrandie d'une plaque bipolaire dans la zone de jonction d'une boîte à fluide actif et la zone active ;
- la figure 4 est une vue agrandie d'une plaque bipolaire dans la partie inférieure d'une boîte à fluide destinée à l'évacuation du fluide oxygéné.

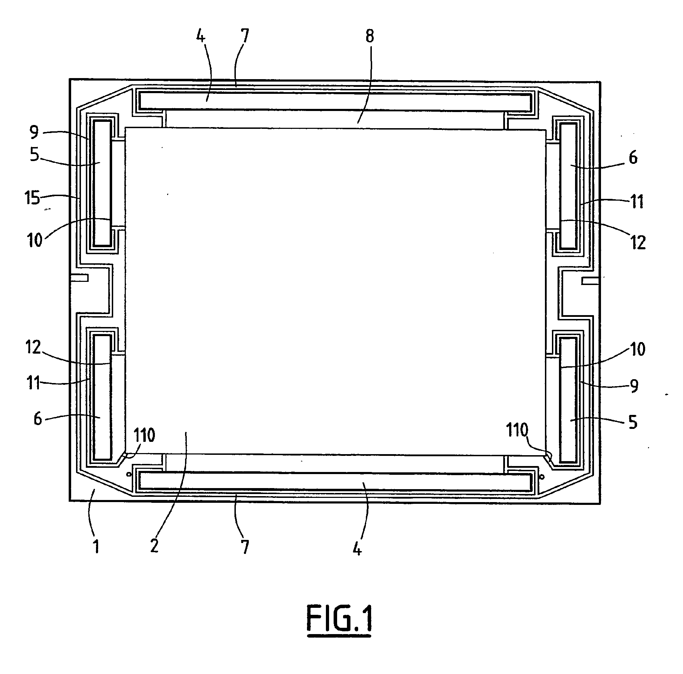

La plaque bipolaire représentée à la figure 1, et dont on ne voit qu'une seule face, est constituée d'une demi-plaque bipolaire 1 cathodique ou anodique, et d'une demi-plaque bipolaire (non visible sur la figure), anodique ou cathodique respectivement, les deux demi-plaques étant accolées l'une contre l'autre par leurs faces internes. Les deux demi-plaques, qui ont des formes tout à fait comparables, sont constituées chacune d'une plaque métallique par exemple en acier inoxydable, de forme généralement rectangulaire. La partie centrale de chaque demi-plaque bipolaire constitue une zone active destinée à assurer une bonne répartition de l'écoulement des fluides sur les surfaces externes de chaque demi-plaque bipolaire, ainsi que du fluide caloporteur entre les deux demi-plaques bipolaires. A leurs périphéries, les deux demi-plaques bipolaires comportent des découpes 4, 5, 6 de forme généralement allongée destinées à réaliser les passages des boîtes à fluide pour l'alimentation et l'évacuation des différents fluides nécessaires au fonctionnement de la pile.

En particulier à la partie supérieure et à la partie inférieure (tel que représenté sur la figure), les plaques bipolaires comportent des découpes 4, destinées à constituer les boîtes à fluide caloporteur. La découpe de la partie supérieure est par exemple destinée à réaliser la boîte d'alimentation en fluide caloporteur, et la découpe inférieure est destinée à réaliser la boîte d'évacuation du fluide caloporteur. Sur les deux bords latéraux, les demi-plaques bipolaires comportent des découpes 5 et 6, généralement allongées, destinées à réaliser d'une part les boîtes d'alimentation et d'évacuation du comburant, et d'autre part des boîtes d'alimentation et d'évacuation du carburant.

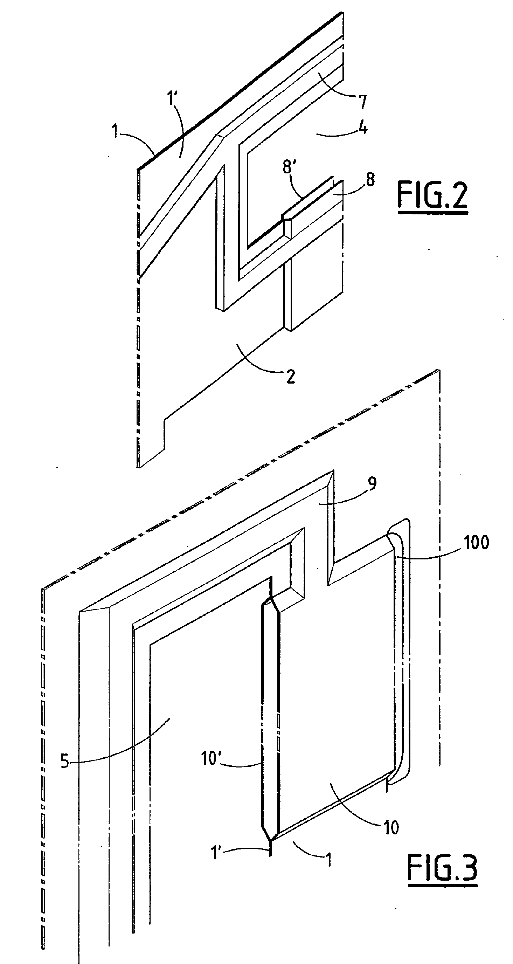

Les découpes 4, destinées à réaliser les boîtes à fluide caloporteur, sont entourées par des nervures 7 en saillie sur la surface externe de chacune des demi-plaques bipolaires 1 destinées à assurer l'étanchéité. Sur leur bordure orientée vers la zone active 2, chaque découpe 4 comporte une nervure 8 permettant la communication entre l'intérieur des boîtes à fluide caloporteur et l'espace situé entre les deux demi-plaques bipolaires. En effet, le fluide caloporteur est destiné à circuler dans l'espace situé entre les deux demi-plaques bipolaires. II doit donc entrer par l'une des boîtes de fluide calyporteur, puis circuler entre les deux plaques, et enfin être évacué par une deuxième boîte à fluide caloporteur. Comme on le voit sur la figure 2, chaque nervure 8 (ou 8' de la deuxième plaque bipolaire, et qui est en regard de la nervure 8) constitue un canal qui débouche dans la zone active 2, entre les deux demi-plaques bipolaires.

De la même façon, les découpes destinées à former des boîtes à comburant 5 ou à carburant 6 sont entourées d'une part de nervures 9 et 11 1 respectivement destinées à assurer l'étanchéité, et d'autre part de nervures 10 et 12 respectivement destinées à assurer la communication entre les boîtes d'amenée et d'évacuation du comburant ou du carburant d'une part, et les surfaces externes de la plaque bipolaire d'autre part. En effet, le comburant et le carburant doivent circuler entre les faces externes des plaques bipolaires et les membranes actives interposées entre deux plaques bipolaires successives ; le comburant circulant sur la face externe de la demi-plaque bipolaire cathodique, et le carburant sur la face externe de la demi-plaque bipolaire anodique.

Les nervures destinées à assurer la communication entre les boîtes à comburant ou à carburant et les faces externes des plaques bipolaires, sont des nervures qui d'une part débouchent à l'intérieur des boîtes à comburant ou à carburant, et d'autre part débouchent à l'autre extrémité par l'intermédiaire d'une ouverture 100 prévue dans la demi-plaque bipolaire adaptée, l'une, correspondant au comburant sur la face externe de la demi-plaque bipolaire cathodique, et l'autre, correspondant au carburant, sur la face externe de la demi-plaque anodique.

Comme on peut le voir sur la figure 3, on peut prévoir une nervure 10 débouchant par un trou 100 sur une demi-plaque bipolaire 1, et en regard de celle-ci, une nervure 10', prévue dans la deuxième demi-plaque bipolaire 1', en regard de la nervure 10, mais ne comportant pas d'ouverture dans la deuxième demi-plaque bipolaire, afin d'orienter le fluide considéré vers la bonne paroi de la plaque bipolaire.

Ces nervures 10, 10', 12, 12' constituent des canaux d'alimentation ou d'évacuation pour les fluides actifs.

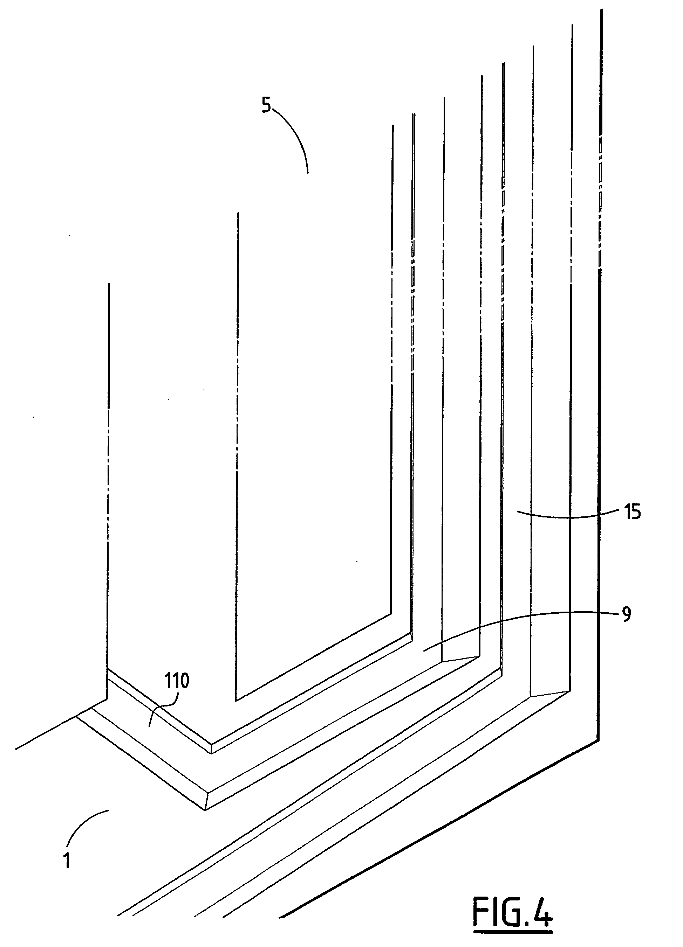

Comme on peut le voir sur la figure 4, la boîte à fluide 5, lorsqu'elle est une boîte d'évacuation de comburant ou de carburant comporte, dans sa partie inférieure, une nervure inclinée ou évasée 110 destinée à évacuer l'eau produite par la réaction dans la pile.

D'une façon générale, toutes les boîtes à fluide d'alimentation ou d'évacuation de carburant ou de comburant peuvent comporter au moins une nervure inclinée ou évasée destinée à évacuer l'eau produite par la réaction. Ces nervures sont disposées dans tous les points susceptibles d'être des points bas, compte tenu du sens de montage de la plaque bipolaire par rapport à l'horizontale.

## Revendications

1. Plaque bipolaire pour pile à combustible, du type comprenant une demi-plaque bipolaire cathodique et une demi-plaque bipolaire anodique accolées l'une à l'autre, chaque demi-plaque bipolaire (1) étant constituée d'une plaque métallique comportant dans sa partie centrale une zone active (2) et à sa partie périphérique une pluralité de découpes (4, 5, 6) destinées à constituer au moins deux boîtes à comburant, au moins deux boîtes à carburant et au moins deux boîtes à fluide caloporteur, la plaque bipolaire comprenant au moins un canal de liaison entre chaque découpe périphérique et la zone active, **caractérisée en ce que** chaque canal de liaison d'une découpe périphérique avec la zone active est constituée d'au moins une nervure (8, 8', 10, 10', 12) dans une demi-plaque bipolaire.

2. Plaque bipolaire selon la revendication 1, **caractérisée en ce que** chaque canal de liaison d'une découpe périphérique avec la zone active est constitué par au moins deux nervures en regard l'une de l'autre, une nervure (8, 10, 12) étant prévue dans une demi-plaque bipolaire et l'autre nervure (8', 10') étant prévue dans l'autre demi-plaque bipolaire.

3. Plaque bipolaire selon la revendication 1 ou la revendication 2, **caractérisée en ce que**, lorsque une découpe (4) est destinée à constituer une boîte à fluide caloporteur, l'au moins une nervure (8) qui constitue le canal de liaison entre ladite découpe et la zone active débouche dans la zone active (2), entre les deux demi-plaques bipolaires.

4. Plaque bipolaire selon l'une quelconque des revendications 1 à 3, **caractérisée en ce que** les canaux de liaison entre les boîtes (5) à comburant et la zone active (2), débouchent, au voisinage de ladite zone active, sur la face externe de la demi-plaque bipolaire cathodique par l'intermédiaire d'une découpe (100) prévue dans ladite demi-plaque bipolaire cathodique, et **en ce que** 1es canaux de liaison entre les boîtes à carburant et la zone active, débouchent, au voisinage de ladite zone active, sur la face externe de la demi-plaque bipolaire anodique par l'intermédiaire d'une découpe prévue dans ladite demi-plaque anodique.

5. Plaque bipolaire selon la revendication 4, **caractérisée en ce qu'**elle comprend au moins un canal de liaison incliné (110) ou évasé disposé au point bas d'au moins une découpe (5) destinée à réaliser une boîte à comburant.

6. Plaque bipolaire selon la revendication 4, **caractérisée en ce qu'**elle comprend au moins un canal de liaison incliné ou évasé disposée au point bas d'au moins une découpe (6) destinée à réaliser une boîte à carburant.

7. Plaque bipolaire selon les revendications 5 et 6, **caractérisée en ce qu'**elle comprend des canaux de liaison incliné ou évasé disposés en tout point bas potentiel des bottes comburant et carburant.

8. Plaque bipolaire selon l'une quelconque des revendications 1 à 7, **caractérisée en ce que** au moins une demi-plaque bipolaire est une plaque métallique, mise en forme par découpage, par exemple au laser, et emboutissage.

9. Pile à combustible du type comprenant au moins une cellule constituée d'un assemblage membrane/électrode comprenant au moins une plaque bipolaire, **caractérisée en ce que** l'au moins une plaque bipolaire est conforme à l'une quelconque des revendications 1 à 8.

## Claims

1. Bipolar plate for a fuel cell, of the type comprising a cathode bipolar half-plate and an anode bipolar half-plate which are secured to each other, each bipolar half-plate (1) being constituted by a metal plate comprising an active zone (2) in the central portion thereof and, at the peripheral portion thereof, a plurality of cutouts (4, 5, 6) which are intended to constitute at least two liquid oxygen casings, at least two fuel casings and at least two heat-exchange fluid casings, the bipolar plate comprising at least one connection channel between each peripheral cutout and the active zone, **characterised in that** each channel for connecting a peripheral cutout to the active zone is constituted by at least one rib (8, 8', 10, 10', 12) in a bipolar half-plate.

2. Bipolar plate according to claim 1, **characterised in that** each channel for connecting a peripheral cutout to the active zone is constituted by at least two ribs facing each other, one rib (8, 10, 12) being provided in a bipolar half-plate and the other rib (8', 10') being provided in the other bipolar half-plate.

3. Bipolar plate according to claim 1 or claim 2, **characterised in that**, when a cutout (4) is intended to constitute a heat-exchange fluid casing, the at least one rib (8) which constitutes the connection channel between the cutout and the active zone opens in the active zone (2) between the two bipolar half-plates.

4. Bipolar plate according to any one of claims 1 to 3, **characterised in that** the connection channels between the liquid oxygen casings (5) and the active zone (2) open, in the region of the active zone, at the outer face of the cathode bipolar half-plate by means of a cutout (100) which is provided in the cathode bipolar half-plate, and **in that** the connection channels between the fuel casings and the active zone open, in the region of the active zone, at the outer face of the anode bipolar half-plate by means of a cutout which is provided in the anode half-plate.

5. Bipolar plate according to claim 4, **characterised in that** it comprises at least one inclined or flared connection channel (110) which is provided at the lowest location of at least one cutout (5) which is intended to construct a liquid oxygen casing.

6. Bipolar plate according to claim 4, **characterised in that** it comprises at least one inclined or flared connection channel which is provided at the lowest location of at least one cutout (6) which is intended to construct a fuel casing.

7. Bipolar plate according to claim 5 and claim 6, **characterised in that** it comprises inclined or flared connection channels which are provided at all the potential lowest locations of the fuel and liquid oxygen casings.

8. Bipolar plate according to any one of claims 1 to 7, **characterised in that** at least one bipolar half-plate is a metal plate which is formed by cutting, for example, using a laser, and swaging.

9. Fuel cell of the type comprising at least one cell which is constituted by a membrane/electrode assembly which comprises at least one bipolar plate, **characterised in that** the at least one bipolar plate is in accordance with any one of claims 1 to 8.

## Patentansprüche

1. Bipolare Elektrode für eine Brennstoffzelle, des Typs, der eine bipolare kathodische Halbelektrode und eine bipolare anodische Halbelektrode umfasst, die miteinander zusammenhängen, wobei jede bipolare Halbelektrode (1) aus einer Metallelektrode besteht, die in ihrem Mittelteil eine aktive Zone (2) und auf ihrem peripheren Teil eine Vielzahl von Ausstanzungen (4, 5, 6) umfasst, die dazu ausgelegt sind, mindestens zwei Verbrennungskästen, mindestens zwei Kraftstoffkästen und mindestens zwei Wärmetransportfluidkästen aufzubauen, wobei die bipolare Elektrode mindestens einen Verbindungskanal zwischen jeder peripheren Ausstanzung und der aktiven Zone umfasst, **dadurch gekennzeichnet, dass** jeder Verbindungskanal einer peripheren Ausstanzung mit der aktiven Zone aus mindestens einer Rippe (8, 8', 10, 10', 12) in einer bipolaren Halbelektrode aufgebaut ist.

2. Bipolare Elektrode nach Anspruch 1, **dadurch gekennzeichnet, dass** jeder Verbindungskanal einer peripheren Austanzung mit der aktiven Zone aus mindestens zwei sich gegenüberstehenden Rippen aufgebaut ist, wobei eine Rippe (8, 10, 12) in einer bipolaren Halbelektrode vorgesehen ist und die andere Rippe (8', 10') in der anderen bipolaren Halbelektrode vorgesehen ist.

3. Bipolare Elektrode nach Anspruch 1 oder Anspruch 2, **dadurch gekennzeichnet, dass**, wenn eine Ausstanzung (4) dazu ausgelegt ist, einen Wärmetransportfluidkasten aufzubauen, die mindestens eine Rippe (8), die den Verbindungskanal zwischen der Austanzung und der aktiven Zone aufbaut, zwischen den beiden bipolaren Halbelektroden in die aktive Zone (2) mündet.

4. Bipolare Elektrode nach einem der Ansprüche 1 bis 3, **dadurch gekennzeichnet, dass** die Verbindungskanäle zwischen den Verbrennungskästen (5) und der aktiven Zone (2) in der Nachbarschaft der aktiven Zone an die Außenseite der kathodischen bipolaren Halbelektrode über eine Ausstanzung (100) münden, die in der kathodischen bipolaren Halbelektrode vorgesehen ist, und **dadurch**, dass die Verbindungskanäle zwischen den Kraftstoffkästen und der aktiven Zone in der Nachbarschaft der aktiven Zone an die Außenseite der anodischen bipolaren Halbelektrode über eine Ausstanzung münden, die in der anodischen bipolaren Halbelektrode vorgesehen ist.

5. Bipolare Elektrode nach Anspruch 4, **dadurch gekennzeichnet, dass** sie mindestens einen geneigten oder konisch erweiterten Verbindungskanal (110) umfasst, der am Tiefpunkt von mindestens einer zur Realisierung einer Kraftstoffkammer ausgelegten Ausstanzung (5) angeordnet ist.

6. Bipolare Elektrode nach Anspruch 4, **dadurch gekennzeichnet, dass** sie mindestens einen geneigten oder konisch erweiterten Verbindungskanal umfasst, der am Tiefpunkt von mindestens einer zur Realisierung einer Verbrennungskammer ausgelegten Ausstanzung (6) angeordnet ist.

7. Bipolare Elektrode nach den Ansprüchen 5 und 6, **dadurch gekennzeichnet, dass** sie geneigte oder konisch erweiterte Verbindungskanäle umfasst, die an jedem potentiellen Tiefpunkt der Verbrennungs- und Kraftstoffkammer angeordnet sind.

8. Bipolare Elektrode nach einem der Ansprüche 1 bis 7, **dadurch gekennzeichnet, dass** mindestens eine bipolare Halbelektrode eine durch Stanzen, beispielsweise Laser und Tiefziehen, geformte Metallelektrode ist.

9. Brennstoffzelle des Typs, der mindestes eine Zelle umfasst, die aus einem Aufbau von Membran/Elektrode aufgebaut ist, der mindestens eine bipolare Elektrode umfasst, **dadurch gekennzeichnet, dass** die mindestens eine bipolare Elektrode einem der Ansprüche 1 bis 8 genügt.
